# FASCICULE DE BREVET EUROPEEN

(11) **EP 2 412 123 B1**
(45) Date de publication et mention de la délivrance du brevet: **08.07.2020**
(21) Numéro de dépôt: 10711060.3
(22) Date de dépôt: 25.03.2010
(51) Int. Cl.: H04L 9/08, H04L 9/32, H04L 29/06

(54) **PROCEDE ET DISPOSTIF D'ARCHIVAGE D'UN DOCUMENT**
VERFAHREN UND EINRICHTUNG ZUM ARCHIVIEREN EINES DOKUMENTS
METHOD AND DEVICE FOR ARCHIVING A DOCUMENT

(30) Priorité: 26.03.2009 FR 0901441; 26.03.2009 FR 0901442
(43) Date de publication de la demande: 01.02.2012
(73) Titulaire: Trustcorp S.A., 8008 Strassen (LU)
(72) Inventeur: BLOT-LEFEVRE, Eric, F-92200 Neuilly-sur-seine (FR)
(74) Mandataire: Loubet, Bruno Thomas
(86) Numéro de dépôt international: PCT/EP2010/053953
(87) Numéro de publication internationale: WO 2010/108994

(56) Documents cités:
- WO-A-02/093849
- FR-A- 2 786 049
- FR-A- 2 804 561
- US-A1- 2003 101 346
- ERIC GAUTRIN: "VISON : Vers un Intranet Sécurisé Ouvert au Nomadisme" 20060131, [Online] 31 janvier 2006 (2006-01-31), pages 1-10, XP007914709 Extrait de l'Internet: URL:http://hal.archives-ouvertes.fr/docs/0 0/05/71/96/PDF/papierJRES05-V7.pdf> [extrait le 2010-09-01]
- VICTOR SHOUP: "A Proposal for an ISO Standard for Public Key Encryption (version 2.1)" INTERNET CITATION, [Online] 20 décembre 2001 (2001-12-20), page COMPLETE, XP007910787 Extrait de l'Internet: URL:http://eprint.iacr.org/2001/112.pdf> [extrait le 2009-12-04]
- Isabelle De Lamberterie: "Policy Cross-domain Réflexions sur l'établissement et la conservation des actes authentiques", , 1 June 2001 (2001-06-01), XP055584854, Retrieved from the Internet: URL:http://www.interpares.org/display_file .cfm?doc=ip2(delamberterie)_reflexions_eta blissement_et_conservation_actes_authentiq ues.pdf [retrieved on 2019-04-30]

## Description

La présente invention concerne un procédé et un dispositif de chiffrement d'un document. Elle s'applique, en particulier, à l'archivage confidentiel ou secret de documents pour récupération ultérieure par leur propriétaire légitime et à la transmission confidentielle de documents à un destinataire.

On connaît de nombreuses méthodes de chiffrement, à clés symétriques ou à bi-clés asymétriques (par exemple conformes à l'infrastructure à clés publiques PKI, acronyme de « Public Key Infrastructure »). Cependant, ces méthodes de chiffrement ne sont pas adaptées à assurer, à la fois, un haut niveau de sécurité des documents et une possibilité de récupération des documents si les clés sont perdues (par exemple, en cas de décès de leur propriétaire ou de décision judiciaire visant à les récupérer).

La demande de brevet américain publiée sous le numéro US 2003/0101346 divulgue une méthode de validation d'un envoi électronique.

Le document Isabelle de Lamberterie « Policy Cross-domain Réflexions sur l'établissement et la conservation des actes authentiques » discute des problématiques de conservation des actes authentiques

La présente invention vise à remédier à ces inconvénients.

A cet effet, la présente invention divulgue un procédé d'archivage d'un document par un utilisateur comprenant une étape de transmission du document et d'une clé symétrique à un opérateur de séquestre, une étape de chiffrement, par l'opérateur de séquestre, du document avec la clé symétrique, une étape de transmission dudit document chiffré à un opérateur d'archivage distinct de l'opérateur de séquestre, une étape de vérification du chiffrement d'effacement du document, une étape de destruction du document chiffré et de la clé symétrique par l'opérateur de séquestre, ledit procédé étant caractérisé en ce qu'il comprend en outre une étape de chiffrement de la clé symétrique avec une clé d'un bi-clés de clés asymétriques, et en ce que l'étape de transmission du document chiffré à l'opérateur d'archivage comprend également une transmission de la clé symétrique chiffrée à l'opérateur d'archivage.

Avantageusement, le procédé de l'invention comprend une étape de génération de ladite clé symétrique pour chaque document à chiffrer.

Avantageusement, ladite clé symétrique est différente pour chaque document à chiffrer.

Avantageusement, au cours de l'étape de chiffrement avec la clé asymétrique, ladite clé asymétrique est la clé publique de l'utilisateur ayant transmis ledit document.

Avantageusement, au cours de l'étape de chiffrement avec la clé asymétrique, ladite clé asymétrique est la clé publique d'un utilisateur destinataire du document.

Avantageusement, le procédé de l'invention comprend en outre une étape d'effacement du document chiffré et de conservation de la clé symétrique par le système informatique effectuant les étapes de chiffrement.

Avantageusement, le procédé de l'invention comprend en outre une étape de transmission par l'opérateur d'archivage à l'utilisateur du document chiffré, une étape de transmission par l'opérateur de séquestre audit utilisateur de la clé symétrique de chiffrement du document chiffré et une étape de déchiffrement par ledit utilisateur dudit document chiffré avec ladite clé symétrique.

Avantageusement, le procédé de l'invention comprend en outre une étape de transmission par l'opérateur d'archivage à un tiers habilité du document chiffré, une étape de transmission par l'opérateur de séquestre audit tiers habilité de la clé symétrique de chiffrement du document chiffré et une étape de déchiffrement par ledit tiers habilité dudit document chiffré avec ladite clé symétrique.

L'invention divulgue également un dispositif d'archivage d'un document par un utilisateur comprenant : un module apte à transmettre le document et une clé symétrique à un opérateur de séquestre ; un module apte à réaliser le chiffrement, par l'opérateur de séquestre, dudit document avec la clé symétrique, un module apte à transmettre ledit document chiffré à un opérateur d'archivage distinct de l'opérateur de séquestre ; un module apte à vérifier le chiffrement et effacer le document ; un module apte à détruire le document chiffré et la clé symétrique, ledit dispositif étant caractérisé en ce qu'il
comprend en outre un module de chiffrement de la clé symétrique avec une clé d'un bi-clés de clés asymétriques, et en ce que le module apte à transmettre le document chiffré à l'opérateur d'archivage est également apte à transmettre la clé symétrique à l'opérateur d'archivage.

Avantageusement, le dispositif de l'invention comprend en outre un moyen de génération de ladite clé symétrique pour chaque document à chiffrer.

Avantageusement, ladite clé symétrique est différente pour chaque document à chiffrer.

Avantageusement, le dispositif de l'invention comprend en outre un module apte à réaliser la transmission par l'opérateur d'archivage à l'utilisateur du document chiffré, un module apte à réaliser la transmission par l'opérateur de séquestre audit utilisateur de la clé symétrique de chiffrement du document chiffré et un module apte à réaliser le déchiffrement par ledit utilisateur dudit document chiffré avec ladite clé symétrique.

Avantageusement, le dispositif de l'invention comprend en outre un module apte à réaliser la transmission par l'opérateur d'archivage à un tiers habilité du document chiffré, un module apte à réaliser la transmission par l'opérateur de séquestre audit tiers habilité de la clé symétrique de chiffrement du document chiffré et un module apte à réaliser le déchiffrement par ledit tiers habilité dudit document chiffré avec ladite clé symétrique.

Les avantages, buts et caractéristiques particulières de ce dispositif étant similaires à ceux du procédé objet de la présente invention, tel que succinctement exposé ci-dessus, ils ne sont pas rappelés ici.

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement, un premier mode de réalisation particulier d'un dispositif objet de la présente invention adapté au cas dans lequel l'émetteur est aussi le destinataire du document traité,
- la figure 2 représente, sous forme d'un logigramme, un premier mode de réalisation particulier du procédé objet de la présente invention adapté à une transmission d'un document, adapté au cas dans lequel l'émetteur est aussi le destinataire du document traité et ne dispose pas d'un bi-clés personnel,
- la figure 3 représente, schématiquement, un deuxième mode de réalisation particulier d'un dispositif objet de la présente invention, adapté au cas dans lequel l'émetteur et le destinataire du document traité sont distincts,
- la figure 4 représente, sous forme d'un logigramme, un deuxième mode de réalisation particulier du procédé objet de la présente invention adapté à un archivage personnel d'un document, adapté au cas dans lequel ni l'émetteur, ni le destinataire ne disposent d'un bi-clés personnel,
- la figure 5 représente, sous forme d'un logigramme, un troisième mode de réalisation particulier du procédé objet de la présente invention adapté à une transmission d'un document, adapté au cas dans lequel l'émetteur est aussi le destinataire et dispose d'un bi-clés personnel et
- la figure 6 représente, sous forme d'un logigramme, un quatrième mode de réalisation particulier du procédé objet de la présente invention adapté à un archivage personnel d'un document adapté au cas dans lequel l'émetteur et le destinataires disposent d'un bi-clés personnel.

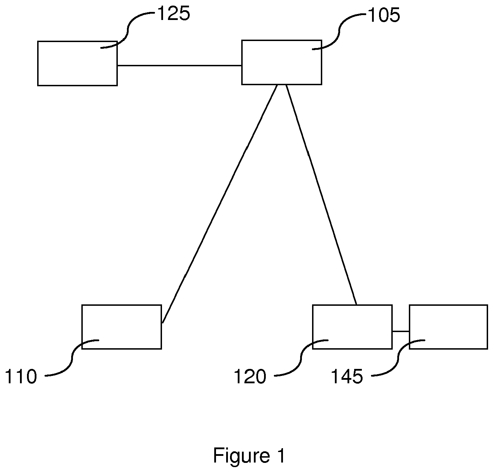

On observe, en figure 1, une agence/autorité d'ordonnancement et de certification 105, un opérateur de séquestre 110, un opérateur de transmission 120 et un opérateur d'archivage 145. Un premier utilisateur, aussi appelé par la suite utilisateur « émetteur », met en œuvre un terminal 125 pour interagir avec l'agence 105.

L'agence/autorité d'ordonnancement et de certification 105, l'opérateur de séquestre 110, l'opérateur de transmission 120 et l'opérateur d'archivage 145 mettent, généralement, en oeuvre des serveurs (non représentés) qui communiquent, entre eux, par l'intermédiaire de réseaux informatiques (non représentés), par exemple, le réseau Internet.

Pour chaque archivage ou transmission de document, il est, conformément à la présente invention, fait usage d'une clé symétrique. Cette clé symétrique est, préférentiellement, attribuée à l'utilisateur émetteur pour chaque document qu'il archive ou transmet.

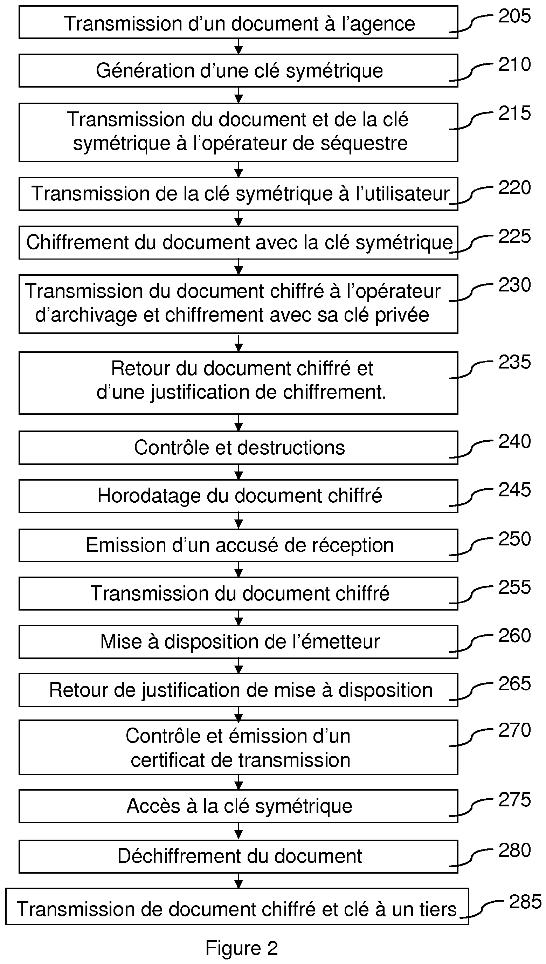

Comme on l'observe en figure 2, pour effectuer un archivage chiffré d'un document lorsque l'émetteur ne dispose pas d'un bi-clés, le terminal 125 transmet ce document non chiffré, à l'agence d'ordonnancement et de certification 105, au cours d'une étape 205.

Au cours d'une étape 210, l'agence 105 génère une clé de chiffrement symétrique. En variante, c'est le terminal 125 de l'utilisateur émetteur qui fournit cette clé de chiffrement symétrique à l'agence 105.

Puis, au cours d'une étape 215, l'agence 105 transmet le document et la clé symétrique à l'opérateur de séquestre 110. Au cours d'une étape 220, l'agence 105 transmet cette clé symétrique au bureau privé de gestion « BPG » de l'utilisateur émetteur. Le bureau privé de gestion est un espace mis à disposition d'un utilisateur par un Fournisseur d'Application Communautaire, ici confondu avec l'agence 105, et protégé au moins par un nom d'utilisateur et un mot de passe connus de ce seul utilisateur.

Au cours d'une étape 225, l'opérateur de séquestre 110 effectue le chiffrement du document avec la clé symétrique reçue au cours de l'étape 215. Au cours d'une étape 230, l'opérateur de séquestre 110 conserve la clé symétrique et transmet le document, chiffré avec la clé symétrique, à l'opérateur d'archivage qui effectue un second chiffrement, avec sa propre clé privée, du document déjà chiffré avec la clé symétrique et conserve le document doublement chiffré.

Au cours d'une étape 235, l'opérateur de séquestre retourne à l'agence 105 le document chiffré avec la clé symétrique et une justification de liste récapitulative de chiffrement, qui justifie de la réalisation de toutes les étapes prévues pour réaliser les chiffrements.

Au cours d'une étape 240, l'agence 105 contrôle la justification de chiffrement, détruit le document non chiffré et la clé symétrique et fait détruire le document non chiffré conservé par le tiers de séquestre 110.

Au cours d'une étape 245, l'agence 105 effectue un horodatage du document chiffré et de la justification de chiffrement.

Au cours d'une étape 250, l'agence 105 émet une accusé de réception et de certification horodaté de chiffrement à l'opérateur de séquestre 110 et l'opérateur de séquestre 110 conserve cet accusé de réception et de certification ainsi que la clé symétrique de l'utilisateur émetteur mais détruit le document chiffré.

Au cours d'une étape 255, l'agence 105 transmet le document chiffré à l'opérateur de transmission 120. Au cours d'une étape 260, l'opérateur de transmission 120 met le document chiffré dans le compte courant de correspondance de l'émetteur. Au cours d'une étape 265, l'opérateur de transmission 120 retourne à l'agence 105, par l'intermédiaire du tiers de confiance 115, une justification de liste récapitulative du placement du document chiffré en compte courant de correspondance de l'émetteur. Cette justification représente la bonne réalisation de toutes les étapes liées au placement du document chiffré dans le compte courant de correspondance de l'utilisateur émetteur.

Au cours d'une étape 270, l'agence 105 transmet à l'opérateur de transmission 120 un certificat de transmission horodaté.

Pour relire le document, au cours d'une étape 275, l'émetteur accède à la clé symétrique et, au cours d'une étape 280, l'émetteur déchiffre le document chiffré. Les étapes 275 et 280 sont éventuellement réalisées par l'intermédiaire du tiers de séquestre avec horodatage et transmission à l'agence 105 d'une justification de liste récapitulative de déchiffrement.

En cas de besoin, par exemple pour des opérations d'instruction judiciaire et/ou sur commission rogatoire, au cours d'une étape 285, la clé symétrique conservée par l'opérateur de séquestre et le document chiffré conservé par l'opérateur d'archivage sont transmis à un tiers qui déchiffre le document chiffré avec cette clé symétrique.

Ainsi, dans le cas de l'archivage personnel (l'émetteur et le destinataire du document sont confondus) dans lequel l'émetteur ne dispose pas de bi-clés, le document est chiffré avec une clé symétrique exclusivement affectée à ce document. La clé symétrique ayant servi à chiffrer le document reste chez le tiers séquestre et est conservée par l'émetteur du document dans son bureau privé de gestion.

Le document chiffré par la clé symétrique chez le tiers séquestre est envoyé au tiers d'archivage (par exemple un Opérateur Tiers de Confiance) qui effectue un second chiffrement avec sa clé privée pour l'archivage légal.

Si l'émetteur veut déchiffrer et consulter en clair son document, il peut le faire de son bureau privé de gestion, qui est sécurisé. Soit il a conservé, dans ce bureau privé de gestion, la clé symétrique reçue au cours de l'étape 220 et le document chiffré disponible dans son compte courant de correspondance et le déchiffrement se fait simplement dans son bureau privé de gestion, sur la base de ces deux éléments.

Soit, le tiers d'archivage envoie le document déchiffré avec sa clé publique mais encore chiffré avec la clé symétrique, au Fournisseur d'Application Communautaire qui gère le bureau de gestion privé de l'émetteur. Ainsi, l'émetteur peut déchiffrer le document, en effectuant, un déchiffrement avec la clé symétrique associée à ce document, dans son bureau privé de gestion.

En variante, le tiers d'archivage envoie le document doublement chiffré au Fournisseur d'Application Communautaire. Ainsi, l'émetteur peut déchiffrer le document, en effectuant, d'abord un déchiffrement avec la clé publique de l'Opérateur Tiers de Confiance puis avec la clé symétrique détenue dans son bureau pour ce document déchiffrer le document.

En cas de commission rogatoire ou de procédure notariale (décès, tutelle, ...), il est toujours possible de demander au tiers séquestre de déchiffrer le document sans intervention de l'émetteur du document. En effet, comme on l'a vu, le tiers séquestre dispose d'une clé symétrique dédiée au document suffisante pour le déchiffrer.

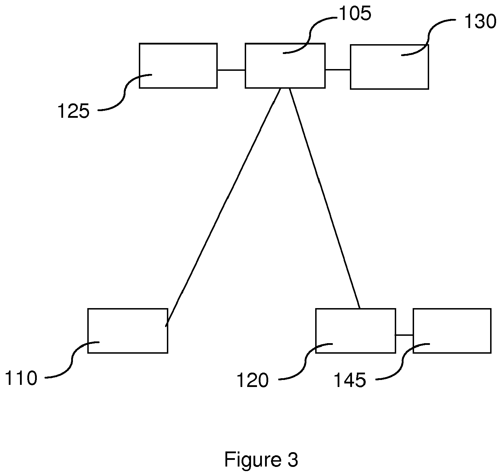

On observe, en figure 3, une agence/autorité d'ordonnancement et de certification 105, un opérateur de séquestre 110, un opérateur de transmission 120, et un opérateur d'archivage 145. Un premier utilisateur, aussi appelé par la suite utilisateur « émetteur », met en œuvre un terminal 125 pour interagir avec l'agence 105. Un deuxième utilisateur, aussi appelé par la suite utilisateur « destinataire », met en œuvre un terminal 130 pour interagir avec l'opérateur de transmission 120.

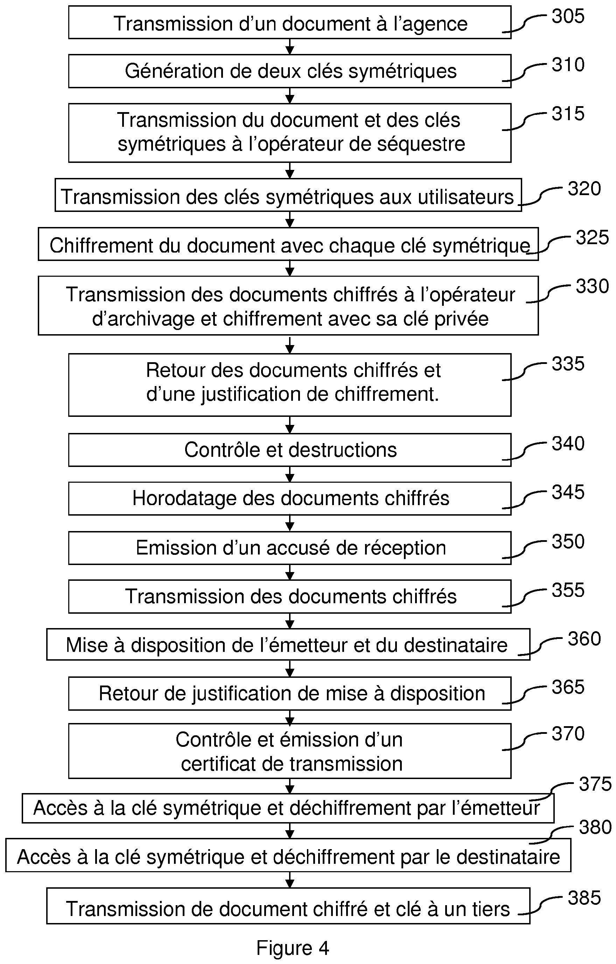

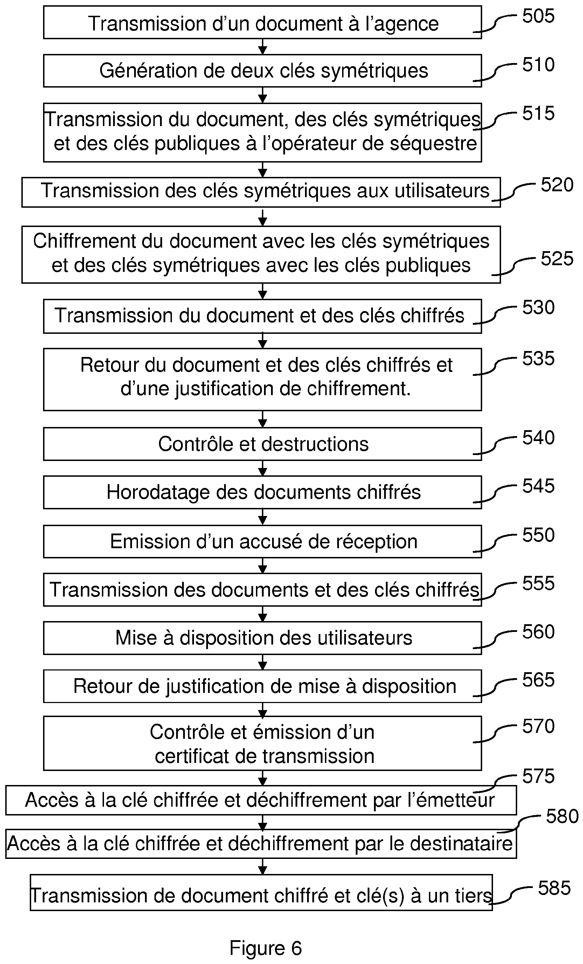

On note que, en figures 4 et 6, il a été considéré que l'émetteur et le destinataire étaient liés au même opérateur de transmission et à la même agence. Au cas où ils seraient liés à des opérateurs et agences différents, les étapes concernant les documents chiffrés mentionnées dans ces figures, pour l'opérateur de transmission et pour l'agence, seraient effectuées, en parallèle et séparément, par les deux opérateurs et deux agences concernés.

Comme on l'observe en figure 4, pour effectuer une transmission chiffrée d'un document depuis un émetteur à un destinataire, le terminal 125 transmet ce document non chiffré, à l'agence d'ordonnancement et de certification 105, au cours d'une étape 305.

Au cours d'une étape 310, l'agence 105 génère deux clés de chiffrement symétriques différentes destinées, respectivement, à l'émetteur et au destinataire.

Puis, au cours d'une étape 315, l'agence 105 transmet le document et les clés symétriques à l'opérateur de séquestre 110. Au cours d'une étape 320, l'agence 105 transmet la clé symétrique de l'émetteur au bureau privé de gestion « BPG » de l'utilisateur émetteur et la clé symétrique de l'émetteur destinataire au bureau privé de gestion du destinataire.

Au cours d'une étape 325, l'opérateur de séquestre 110 effectue les chiffrements du document avec chacune des clés symétriques reçues au cours de l'étape 315. Au cours d'une étape 330, l'opérateur de séquestre 110 conserve les clés symétriques et transmet les documents, chiffrés avec les clés symétriques, à l'opérateur d'archivage qui effectue un second chiffrement, avec sa propre clé privée, des documents déjà chiffrés avec les clés symétriques et conserve les documents doublement chiffrés.

Au cours d'une étape 335, l'opérateur de séquestre retourne à l'agence 105 les documents chiffrés avec les clés symétriques et une justification de liste récapitulative de chiffrement, qui justifie de la réalisation de toutes les étapes prévues pour réaliser les chiffrements.

Au cours d'une étape 340, l'agence 105 contrôle la justification de chiffrement, détruit le document non chiffré et les clés symétriques et fait détruire le document non chiffré conservé par le tiers de séquestre 110.

Au cours d'une étape 345, l'agence 105 effectue un horodatage du document chiffré et de la justification de chiffrement.

Au cours d'une étape 350, l'agence 105 émet une accusé de réception et de certification horodaté de chiffrement à l'opérateur de séquestre 110 et l'opérateur de séquestre 110 conserve cet accusé de réception et de certification ainsi que les clés symétriques mais détruit les documents chiffrés.

Au cours d'une étape 355, l'agence 105 transmet les documents chiffrés à l'opérateur de transmission 120. Au cours d'une étape 360, l'opérateur de transmission 120 met le document chiffré avec la clé symétrique de l'émetteur dans le compte courant de correspondance de l'émetteur. Au cours de l'étape 360, l'opérateur de transmission 120 met aussi le document chiffré avec la clé symétrique du destinataire dans le compte courant de correspondance du destinataire. Au cours d'une étape 365, l'opérateur de transmission 120 retourne à l'agence 105, par l'intermédiaire du tiers de confiance 115, une justification de liste récapitulative du placement des documents chiffrés en comptes courants de correspondance. Cette justification représente la bonne réalisation de toutes les étapes liées au placement des documents chiffrés dans les comptes courants de correspondance.

Au cours d'une étape 370, l'agence 105 transmet à l'opérateur de transmission 120 un certificat de transmission horodaté.

Pour relire le document, au cours d'une étape 375, l'émetteur accède à sa clé symétrique et déchiffre le document chiffré. L'étape 375 est éventuellement réalisée par l'intermédiaire du tiers de séquestre avec horodatage et transmission à l'agence 105 d'une justification de liste récapitulative de déchiffrement.

Pour lire le document, au cours d'une étape 380, le destinataire accède à sa clé symétrique, par l'intermédiaire du tiers de séquestre, et au document chiffré, et déchiffre le document chiffré. A la fin de cette opération, sont effectués un horodatage et une transmission à l'agence 105 d'une justification de liste récapitulative de déchiffrement.

En cas de besoin, par exemple pour des opérations d'instruction judiciaire et/ou sur commission rogatoire, au cours d'une étape 385, l'une des clés symétriques conservées par l'opérateur de séquestre et le document chiffré correspondant conservé par l'opérateur d'archivage sont transmis à un tiers qui déchiffre le document chiffré avec la clé symétrique.

En variante du mode de réalisation illustré en figure 4, les deux clés symétriques sont identiques.

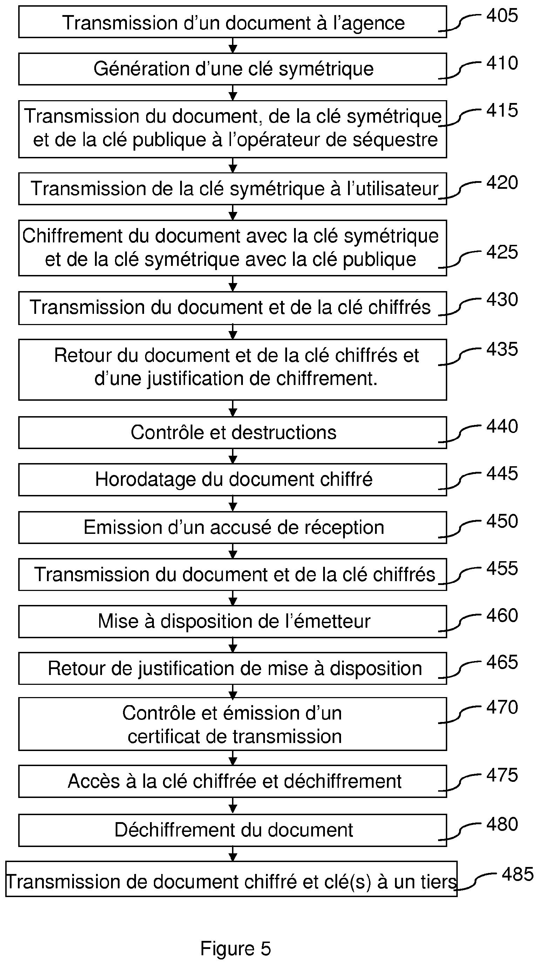

Comme on l'observe en figure 5, pour effectuer un archivage chiffré d'un document lorsque l'émetteur dispose d'un bi-clés, le terminal 125 transmet ce document non chiffré, à l'agence d'ordonnancement et de certification 105, au cours d'une étape 405.

Au cours d'une étape 410, l'agence 105 génère une clé de chiffrement symétrique. En variante, c'est le terminal 125 de l'utilisateur émetteur qui fournit cette clé de chiffrement symétrique à l'agence 105.

Puis, au cours d'une étape 415, l'agence 105 transmet le document, la clé symétrique et la clé publique de l'émetteur à l'opérateur de séquestre 110. Au cours d'une étape 420, l'agence 105 transmet cette clé symétrique au bureau privé de gestion « BPG » de l'utilisateur émetteur.

Au cours d'une étape 425, l'opérateur de séquestre 110 effectue le chiffrement du document avec la clé symétrique reçue au cours de l'étape 415 et le chiffrement de la clé symétrique avec la clé publique de l'émetteur. Au cours d'une étape 430, l'opérateur de séquestre 110 conserve la clé symétrique et transmet le document, chiffré avec la clé symétrique et la clé symétrique chiffrée avec la clé publique de l'émetteur, à l'opérateur d'archivage qui effectue un troisième chiffrement, avec sa propre clé privée, du document déjà chiffré avec la clé symétrique et de la clé symétrique chiffrée avec la clé publique de l'émetteur et conserve le document doublement chiffré et la clé doublement chiffrée.

Au cours d'une étape 435, l'opérateur de séquestre retourne à l'agence 105 le document chiffré avec la clé symétrique, la clé symétrique chiffrée avec la clé publique de l'émetteur et une justification de liste récapitulative de chiffrement, qui justifie de la réalisation de toutes les étapes prévues pour réaliser les chiffrements.

Au cours d'une étape 440, l'agence 105 contrôle la justification de chiffrement, détruit le document non chiffré et la clé symétrique et fait détruire le document non chiffré conservé par le tiers de séquestre 110.

Au cours d'une étape 445, l'agence 105 effectue un horodatage du document chiffré et de la justification de chiffrement.

Au cours d'une étape 450, l'agence 105 émet une accusé de réception et de certification horodaté de chiffrement à l'opérateur de séquestre 110 et l'opérateur de séquestre 110 conserve cet accusé de réception et de certification ainsi que la clé symétrique de l'utilisateur émetteur chiffrée mais détruit le document chiffré et la clé symétrique non chiffrée.

Au cours d'une étape 455, l'agence 105 transmet le document chiffré et la clé symétrique chiffrée à l'opérateur de transmission 120. Au cours d'une étape 460, l'opérateur de transmission 120 met le document chiffré et la clé symétrique chiffrée dans le compte courant de correspondance de l'émetteur. Au cours d'une étape 465, l'opérateur de transmission 120 retourne à l'agence 105, par l'intermédiaire du tiers de confiance 115, une justification de liste récapitulative du placement du document chiffré et de la clé symétrique chiffrée en compte courant de correspondance de l'émetteur. Cette justification représente la bonne réalisation de toutes les étapes liées au placement du document chiffré et de la clé symétrique chiffrée dans le compte courant de correspondance de l'utilisateur émetteur.

Au cours d'une étape 470, l'agence 105 transmet à l'opérateur de transmission 120 un certificat de transmission horodaté.

Pour relire le document, au cours d'une étape 475, l'émetteur accède à la clé symétrique chiffrée, la déchiffre avec sa clé privée et, au cours d'une étape 480, l'émetteur déchiffre le document chiffré. Les étapes 475 et 480 sont éventuellement réalisées par l'intermédiaire du tiers de séquestre avec horodatage et transmission à l'agence 105 d'une justification de liste récapitulative de déchiffrement.

En cas de besoin, par exemple pour des opérations d'instruction judiciaire et/ou sur commission rogatoire, au cours d'une étape 485, la clé symétrique chiffrée conservée par l'opérateur de séquestre, le document chiffré conservé par l'opérateur d'archivage et la clé privée conservée par un tiers de confiance (non représenté) sont transmis à un tiers qui déchiffre le document chiffré avec cette clé symétrique après avoir déchiffré la clé symétrique avec la clé privée de l'émetteur.

En variante, au cours de l'étape 450, la clé symétrique non chiffrée est conservée par l'opérateur de séquestre et, au cours de l'étape 485, l'opérateur de séquestre transmet cette clé symétrique non chiffrée au tiers chargé du déchiffrement.

On note que l'émetteur peut consulter le document de deux manières.

Soit il demande au tiers d'archivage de rapatrier dans son bureau privé de gestion uniquement le document chiffré avec la clé symétrique dont il détient le double dans ce même bureau. Avec la deuxième clé symétrique, il peut lire le document chiffré dans son bureau privé de gestion.

L'émetteur peut aussi demander au tiers d'archivage de transférer sur son poste de travail l'ensemble du document chiffré par la clé symétrique, et la clé symétrique chiffrée par sa clé publique. A réception du lot de ces deux éléments chiffrés, il commence par déchiffrer la clé symétrique avec sa clé privée personnelle. Ensuite, il utilise la clé symétrique déchiffrée pour déchiffrer le document chiffré.

Il existe aussi, pour le Coffre Fort Citoyen, une autre possibilité qui est de faire conserver, par l'opérateur de séquestre et non par le bureau privé de gestion de l'émetteur, la clé symétrique. Cependant, dans ce cas, l'émetteur ne peut utiliser son bureau privé de gestion pour déchiffrer le document puisqu'il ne dispose pas de la clé symétrique nécessaire. Par contre, il peut demander le transfert du document chiffré et de la clé symétrique chiffrée sur son poste de travail pour déchiffrer le tout en utilisant d'abord sa clé privée pour déchiffrer la clé symétrique servant à déchiffrer le document.

Cette option est préférentiellement retenue dans l'hypothèse où l'adhérent a une carte nationale d'identité numérique fonctionnant avec un coffre fort électronique citoyen.

Comme on l'observe en figure 6, pour effectuer une transmission chiffrée d'un document à un destinataire, lorsque l'émetteur et le destinataires disposent de bi-clés, le terminal 125 transmet le document non chiffré, à l'agence d'ordonnancement et de certification 105, au cours d'une étape 505.

Au cours d'une étape 510, l'agence 105 génère deux clés de chiffrement symétriques destinées, respectivement, à l'émetteur et au destinataire. En variante, c'est le terminal 125 de l'utilisateur émetteur qui fournit ces clés de chiffrement symétriques à l'agence 105.

Puis, au cours d'une étape 515, l'agence 105 transmet le document, les clés symétriques et les clés publiques de l'émetteur et du destinataire à l'opérateur de séquestre 110. Au cours d'une étape 520, l'agence 105 transmet ces clés symétriques aux bureaux privés de gestion « BPG », respectivement de l'émetteur et du destinataire.

Au cours d'une étape 525, l'opérateur de séquestre 110 effectue le chiffrement du document avec chaque clé symétrique reçue au cours de l'étape 515 et le chiffrement des clés symétriques avec les clés publiques respectivement de l'émetteur et du destinataire. Au cours d'une étape 530, l'opérateur de séquestre 110 conserve les clés symétriques et transmet les documents chiffrés avec les clés symétriques et les clés symétriques chiffrées avec les clés publiques de l'émetteur et du destinataire, à l'opérateur d'archivage qui effectue un troisième chiffrement, avec sa propre clé privée, des documents déjà chiffrés avec les clés symétriques et des clés symétriques chiffrées avec les clés publiques et conserve les documents doublement chiffrés et les clés doublement chiffrées.

Au cours d'une étape 535, l'opérateur de séquestre retourne à l'agence 105 les documents chiffrés avec les clés symétriques, les clés symétriques chiffrées avec les clés publiques des utilisateurs et une justification de liste récapitulative de chiffrement, qui justifie de la réalisation de toutes les étapes prévues pour réaliser les chiffrements.

Au cours d'une étape 540, l'agence 105 contrôle la justification de chiffrement, détruit le document non chiffré et les clés symétriques.

Au cours d'une étape 545, l'agence 105 effectue un horodatage des documents chiffrés et de la justification de chiffrement.

Au cours d'une étape 550, l'agence 105 émet une accusé de réception et de certification horodaté de chiffrement à l'opérateur de séquestre 110 et l'opérateur de séquestre 110 conserve cet accusé de réception et de certification mais détruit les documents chiffrés et les clés symétriques non chiffrées.

Au cours d'une étape 555, l'agence 105 transmet les documents chiffrés et les clés symétriques chiffrées à l'opérateur de transmission 120. Au cours d'une étape 560, l'opérateur de transmission 120 met les documents chiffrés et les clés symétriques chiffrées dans les comptes courants de correspondance respectivement de l'émetteur et du destinataire. Au cours d'une étape 565, l'opérateur de transmission 120 retourne à l'agence 105, par l'intermédiaire du tiers de confiance 115, une justification de liste récapitulative du placement des documents chiffrés et des clés symétriques chiffrées en comptes courants de correspondance.

Au cours d'une étape 570, l'agence 105 transmet à l'opérateur de transmission 120 un certificat de transmission horodaté.

Pour relire le document, au cours d'une étape 575, l'émetteur accède à sa clé symétrique chiffrée, la déchiffre avec sa clé privée et déchiffre le document chiffré disponible dans son compte de correspondance. L'étape 575 est éventuellement réalisée par l'intermédiaire du tiers de séquestre avec horodatage et transmission à l'agence 105 d'une justification de liste récapitulative de déchiffrement.

Pour lire le document, au cours d'une étape 580, l'émetteur accède à sa clé symétrique chiffrée, la déchiffre avec sa clé privée et déchiffre le document chiffré disponible dans son compte de correspondance. L'étape 580 est éventuellement réalisée par l'intermédiaire du tiers de séquestre avec horodatage et transmission à l'agence 105 d'une justification de liste récapitulative de déchiffrement.

En cas de besoin, par exemple pour des opérations d'instruction judiciaire et/ou sur commission rogatoire, au cours d'une étape 585, une clé symétrique chiffrée conservée par l'opérateur de séquestre, le document chiffré correspondant, conservé par l'opérateur d'archivage et la clé privée correspondante, conservée par un tiers de confiance (non représenté) sont transmis à un tiers qui déchiffre le document chiffré avec cette clé symétrique après avoir déchiffré la clé symétrique avec la clé privée de l'un des utilisateurs.

En variante, au cours de l'étape 550, les clés symétriques non chiffrées sont conservées par l'opérateur de séquestre et, au cours de l'étape 485, l'opérateur de séquestre transmet une de ces clés symétriques non chiffrées au tiers chargé du déchiffrement.

On observe que la présente invention permet de créer un coffre-fort de documents personnels dont la clé privée peut être conservée dans une carte d'identité électronique. L'utilisateur peut ainsi sauvegarder des copies de ses papiers d'identité, de ses diplômes, de ses assurances, de ses feuilles de paye, de ses déclarations fiscales et sociales, par exemple.

## Revendications

1. Procédé d'archivage d'un document par un utilisateur comprenant :
- une étape (215, 315, 415, 515) de transmission du document et d'une clé symétrique à un opérateur de séquestre (110) ;
- une étape (225, 325, 425, 525) de chiffrement, par l'opérateur de séquestre (110), du document avec la clé symétrique,
- une étape (430, 530) de transmission dudit document chiffré à un opérateur d'archivage (145) distinct de l'opérateur de séquestre (110) ;
- une étape (240, 340, 440, 540) de vérification du chiffrement d'effacement du document ;
- une étape (450, 550) de destruction du document chiffré et de la clé symétrique par l'opérateur de séquestre (110) ;
ledit procédé étant **caractérisé :en ce qu'**il comprend en outre une étape (425, 525) de chiffrement de la clé symétrique avec une clé d'un bi-clés de clés asymétriques
et **en ce que** l'étape (430, 530) de transmission du document chiffré à l'opérateur d'archivage comprend également une transmission de la clé symétrique chiffrée à l'opérateur d'archivage.

2. Procédé d'archivage la revendication 1, **caractérisé en ce qu'**il comprend une étape (410, 510) de génération de ladite clé symétrique pour chaque document à chiffrer.

3. Procédé d'archivage selon l'une des revendications 1 à 2, **caractérisé en ce que** ladite clé symétrique est différente pour chaque document à chiffrer.

4. Procédé d'archivage selon l'une des revendications 1 à 3, **caractérisé en ce que**, au cours de l'étape (425, 525) de chiffrement avec la clé asymétrique, ladite clé asymétrique est la clé publique de l'utilisateur ayant transmis ledit document.

5. Procédé d'archivage selon l'une des revendications 1 à 3, **caractérisé en ce que**, au cours de l'étape (425, 525) de chiffrement avec la clé asymétrique, ladite clé asymétrique est la clé publique d'un utilisateur destinataire du document.

6. Procédé d'archivage selon l'une des revendications 1 à 5, **caractérisé en ce qu'**il comprend en outre une étape (415, 440, 515, 540) d'effacement du document chiffré et de conservation de la clé symétrique par le système informatique effectuant les étapes de chiffrement.

7. Procédé d'archivage selon l'une des revendications 1 à 6, **caractérisé en ce qu'**il comprend en outre une étape (255, 355, 455, 555) de transmission par l'opérateur d'archivage à l'utilisateur du document chiffré, une étape (275, 375, 475, 575) de transmission par l'opérateur de séquestre audit utilisateur de la clé symétrique de chiffrement du document chiffré et une étape (280, 380, 480, 580) de déchiffrement par ledit utilisateur dudit document chiffré avec ladite clé symétrique.

8. Procédé d'archivage selon l'une des revendications 1 à 6, **caractérisé en ce qu'**il comprend en outre une étape (255, 355, 455, 555) de transmission par l'opérateur d'archivage à un tiers habilité du document chiffré, une étape (275, 375, 475, 575) de transmission par l'opérateur de séquestre audit tiers habilité de la clé symétrique de chiffrement du document chiffré et une étape (280, 380, 480, 580) de déchiffrement par ledit tiers habilité dudit document chiffré avec ladite clé symétrique.

9. Dispositif d'archivage d'un document par un utilisateur comprenant :
- un module apte à transmettre le document et une clé symétrique à un opérateur de séquestre ;
- un module apte à réaliser le chiffrement, par l'opérateur de séquestre, dudit document avec la clé symétrique,
- un module apte à transmettre ledit document chiffré à un opérateur d'archivage distinct de l'opérateur de séquestre ;
- un module apte à vérifier le chiffrement et effacer le document ;
- un module apte à détruire le document chiffré et la clé symétrique ledit dispositif étant **caractérisé :**
- **en ce qu'**il comprend en outre un module de chiffrement de la clé symétrique avec une clé d'un bi-clés de clés asymétriques,
- et **en ce que** le module apte à transmettre le document chiffré à l'opérateur d'archivage est également apte à transmettre la clé symétrique à l'opérateur d'archivage.

10. Dispositif d'archivage selon la revendication 9, **caractérisé en ce qu'**il comprend en outre un moyen de génération de ladite clé symétrique pour chaque document à chiffrer.

11. Dispositif d'archivage selon l'une des revendications 9 à 10, **caractérisé en ce que** ladite clé symétrique est différente pour chaque document à chiffrer.

12. Dispositif d'archivage selon l'une des revendications 9 à 11, **caractérisé en ce qu'**il comprend en outre un module apte à réaliser la transmission par l'opérateur d'archivage à l'utilisateur du document chiffré, un module apte à réaliser la transmission par l'opérateur de séquestre audit utilisateur de la clé symétrique de chiffrement du document chiffré et un module apte à réaliser le déchiffrement par ledit utilisateur dudit document chiffré avec ladite clé symétrique.

13. Dispositif d'archivage selon l'une des revendications 9 à 11, **caractérisé en ce qu'**il comprend en outre un module apte à réaliser la transmission par l'opérateur d'archivage à un tiers habilité du document chiffré, un module apte à réaliser la transmission par l'opérateur de séquestre audit tiers habilité de la clé symétrique de chiffrement du document chiffré et un module apte à réaliser le déchiffrement par ledit tiers habilité dudit document chiffré avec ladite clé symétrique.

## Patentansprüche

1. Verfahren zum Archivieren eines Dokuments durch einen Benutzer, Folgendes beinhaltend:
- einen Schritt (215, 315, 415, 515) des Übertragens des Dokuments und eines symmetrischen Schlüssels an einen Hinterlegungsregistrar (110);
- einen Schritt (225, 325, 425, 525) des Verschlüsselns, durch den Hinterlegungsregistrar (110), des Dokuments mit dem symmetrischen Schlüssel,
- einen Schritt (430, 530) des Übertragens des verschlüsselten Dokuments an einen Archivar (145), der sich von dem Hinterlegungsregistrar (110) unterscheidet;
- einen Schritt (240, 340, 440, 540) des Überprüfens des Löschungsverschlüsselung des Dokuments;
- einen Schritt (450, 550) des Vemichtens des verschlüsselten Dokuments und des symmetrischen Schlüssels durch den Hinterlegungsregistrar (110);
wobei das Verfahren **dadurch gekennzeichnet ist: dass** es zudem einen Schritt (425, 525) des Verschlüsselns des symmetrischen Schlüssels mit einem Schlüssel eines Doppelschlüssels aus asymmetrischen Schlüsseln beinhaltet und dadurch, dass der Schritt (430, 530) des Übertragens des verschlüsselten Dokuments an den Archivar ebenfalls eine Übertragung des verschlüsselten symmetrischen Schlüssels an den Archivar beinhaltet.

2. Archivierungsverfahren nach Anspruch 1, **dadurch gekennzeichnet, dass** es zudem einen Schritt (410, 510) des Erzeugens des symmetrischen Schlüssels für jedes zu verschlüsselnde Dokument beinhaltet.

3. Archivierungsverfahren nach einem der Ansprüche 1 bis 2, **dadurch gekennzeichnet, dass** der symmetrische Schlüssel für jedes zu verschlüsselnde Dokument unterschiedlich ist.

4. Archivierungsverfahren nach einem der Ansprüche 1 bis 3, **dadurch gekennzeichnet, dass**, im Zuge des Schrittes (425, 525) des Verschlüsselns mit dem asymmetrischen Schlüssel, der asymmetrische Schlüssel der öffentliche Schlüssel desjenigen Benutzers ist, welcher das Dokument übertragen hat.

5. Archivierungsverfahren nach einem der Ansprüche 1 bis 3, **dadurch gekennzeichnet, dass**, im Zuge des Schrittes (425, 525) des Verschlüsselns mit dem asymmetrischen Schlüssel, der asymmetrische Schlüssel der öffentliche Schlüssel eines Benutzers ist, welcher der Empfänger des Dokuments ist.

6. Archivierungsverfahren nach einem der Ansprüche 1 bis 5, **dadurch gekennzeichnet, dass** es zudem einen Schritt (415, 440, 515, 540) des Löschens des verschlüsselten Dokuments und der Aufbewahrung des symmetrischen Schlüssels durch das EDV-System beinhaltet, welches die Verschlüsselungsschritte durchführt.

7. Archivierungsverfahren nach einem der Ansprüche 1 bis 6, **dadurch gekennzeichnet, dass** es zudem einen Schritt (255, 355, 455, 555) des Übertragens durch den Archivar an den Benutzer des verschlüsselten Dokuments, einen Schritt (275, 375, 475, 575) des Übertragens durch den Hinterlegungsregistrar an den Benutzer des symmetrischen Verschlüsselungs-Schlüssels des verschlüsselten Dokuments und einen Schritt (280, 380, 480, 580) des Entschlüsselns durch den Benutzer des verschlüsselten Dokuments mit dem symmetrischen Schlüssel beinhaltet.

8. Archivierungsverfahren nach einem der Ansprüche 1 bis 6, **dadurch gekennzeichnet, dass** es zudem einen Schritt (255, 355, 455, 555) des Übertragens durch den Archivar an einen ermächtigten Dritten des verschlüsselten Dokuments, einen Schritt (275, 375, 475, 575) des Übertragens durch den Hinterlegungsregistrar an den ermächtigten Dritten des symmetrischen Verschlüsselungs-Schlüssels des verschlüsselten Dokuments und einen Schritt (280, 380, 480, 580) des Entschlüsselns durch den ermächtigten Dritten des verschlüsselten Dokuments mit dem symmetrischen Schlüssel beinhaltet.

9. Vorrichtung zum Archivieren eines Dokuments durch einen Benutzer, Folgendes beinhaltend:
- ein Modul, welches in der Lage ist, das Dokument und einen symmetrischen Schlüssel an einen Hinterlegungsregistrar zu übertragen;
- ein Modul, welches in der Lage ist, die Verschlüsselung des Dokuments mit dem symmetrischen Schlüssel durch den Hinterlegungsregistrar zu bewerkstelligen,
- ein Modul, welches in der Lage ist, das verschlüsselte Dokument an einen Archivar zu übertragen, der sich von dem Hinterlegungsregistrar unterscheidet;
- ein Modul, welches in der Lage ist, die Verschlüsselung zu überprüfen und das Dokument zu löschen;
- ein Modul, welches in der Lage ist, das verschlüsselte Dokument und den symmetrischen Schlüssel zu vernichten, wobei die Vorrichtung **dadurch gekennzeichnet ist:**
- **dass** sie zudem ein Verschlüsselungsmodul des symmetrischen Schlüssels mit einem Schlüssel eines Doppelschlüssels aus asymmetrischen Schlüsseln beinhaltet,
- und **dass** das Modul, welches in der Lage ist, das verschlüsselte Dokument an den Archivar zu übertragen, ebenfalls in der Lage ist, den symmetrischen Schlüssel an den Archivar zu übertragen.

10. Archivierungsvorrichtung nach Anspruch 9, **dadurch gekennzeichnet, dass** sie zudem ein Mittel zum Erzeugen des symmetrischen Schlüssels für jedes zu verschlüsselnde Dokument beinhaltet.

11. Archivierungsvorrichtung nach einem der Ansprüche 9 bis 10, **dadurch gekennzeichnet, dass** der symmetrische Schlüssel für jedes zu verschlüsselnde Dokument unterschiedlich ist.

12. Archivierungsvorrichtung nach einem der Ansprüche 9 bis 11, **dadurch gekennzeichnet, dass** sie zudem ein Modul beinhaltet, welches in der Lage ist, die Übertragung durch den Archivar an den Benutzer des verschlüsselten Dokuments zu bewerkstelligen, ein Modul, welches in der Lage ist, die Übertragung durch den Hinterlegungsregistrar an den Benutzer des symmetrischen Verschlüsselungs-Schlüssels des verschlüsselten Dokuments zu bewerkstelligen und ein Modul, welches in der Lage ist, die Entschlüsselung durch den Benutzer des verschlüsselten Dokuments mit dem symmetrischen Schlüssel zu bewerkstelligen.

13. Archivierungsvorrichtung nach einem der Ansprüche 9 bis 11, **dadurch gekennzeichnet, dass** sie zudem ein Modul beinhaltet, welches in der Lage ist, die Übertragung durch den Archivar an einen ermächtigten Dritten des verschlüsselten Dokuments zu bewerkstelligen, ein Modul, welches in der Lage ist, die Übertragung durch den Hinterlegungsregistrar an den ermächtigten Dritten des symmetrischen Verschlüsselungs-Schlüssels des verschlüsselten Dokuments zu bewerkstelligen und ein Modul, welches in der Lage ist, die Entschlüsselung durch den ermächtigten Dritten des verschlüsselten Dokuments mit dem symmetrischen Schlüssel zu bewerkstelligen.

## Claims

1. A method of archiving a document by a user comprising:
- a step (215, 315, 415, 515) of transmitting the document and a symmetric key to a receiver operator (110);
- a step (225, 325, 425, 525), performed by the receiver operator (110), of encrypting the document with the symmetric key;
- a step (430, 530) of transmitting said encrypted document to an archiving operator (145) separate from the receiver operator (110);
- a step (240, 340, 440, 540) of checking the deletion encryption of the document;
- a step (450, 550), performed by the receiver operator (110), of destroying the encrypted document and the symmetric key;
said method being **characterised in that** it further comprises a step (425, 525) of encrypting the symmetric key with a key of a key pair of asymmetric keys, and **in that** the step (430, 530) of transmitting the encrypted document to the archiving operator also comprises transmitting the encrypted symmetric key to the archiving operator.

2. The archiving method as claimed in claim 1, **characterised in that** it comprises a step (410, 510) of generating said symmetric key for each document to be encrypted.

3. The archiving method as claimed in any one of claims 1 to 2, **characterised in that** said symmetric key is different for each document to be encrypted.

4. The archiving method as claimed in any one of claims 1 to 3, **characterised in that**, during the step (425, 525) of encrypting with the asymmetric key, said asymmetric key is the public key of the user who transmitted said document.

5. The archiving method as claimed in any one of claims 1 to 3, **characterised in that**, during the step (425, 525) of encrypting with the asymmetric key, said asymmetric key is the public key of a user intended to receive the document.

6. The archiving method as claimed in any one of claims 1 to 5, **characterised in that** it further comprises a step (415, 440, 515, 540), performed by the computer system performing the encryption steps, of deleting the encrypted document and of preserving the symmetric key.

7. The archiving method as claimed in any one of claims 1 to 6, **characterised in that** it further comprises a step (255, 355, 455, 555), performed by the archiving operator, of transmitting the encrypted document to the user, a step (275, 375, 475, 575), performed by the receiver operator, of transmitting the symmetric key for encrypting the encrypted document to said user and a step (280, 380, 480, 580), performed by said user, of decrypting said encrypted document with said symmetric key.

8. The archiving method as claimed in any one of claims 1 to 6, **characterised in that** it further comprises a step (255, 355, 455, 555), performed by the archiving operator, of transmitting the encrypted document to an authorised third party, a step (275, 375, 475, 575), performed by the receiver operator, of transmitting the symmetric key for encrypting the encrypted document to the authorised third party and a step (280, 380, 480, 580), performed by said authorised third party, of decrypting said encrypted document with said symmetric key.

9. A device allowing a user to archive a document comprising:
- a module able to transmit the document and a symmetric key to a receiver operator;
- a module able to perform the encryption, by the receiver operator, of said document with the symmetric key;
- a module able to transmit said encrypted document to an archiving operator separate from the receiver operator;
- a module able to verify the encryption and to delete the document;
- a module able to destroy the encrypted document and the symmetric key, said device being **characterised:**
- **in that** it further comprises a module for encrypting the symmetric key with a key of a key pair of asymmetric keys;
- and **in that** the module able to transmit the encrypted document to the archiving operator is also able to transmit the symmetric key to the archiving operator.

10. The archiving device as claimed in claim 9, **characterised in that** it further comprises a means for generating said symmetric key for each document to be encrypted.

11. The archiving device as claimed in any one of claims 9 to 10, **characterised in that** said symmetric key is different for each document to be encrypted.

12. The archiving device as claimed in any one of claims 9 to 11, **characterised in that** it further comprises a module able to perform, by the archiving operator, the transmission of the encrypted document to the user, a module able to perform, by the receiver operator, the transmission of the symmetric key for encrypting the encrypted document to said user and a module able to perform the decrypting of said encrypted document with said symmetric key by said user .

13. The archiving device as claimed in any one of claims 9 to 11, **characterised in that** it further comprises a module able to perform, by the archiving operator, the transmission of the encrypted document to an authorised third party, a module able to perform, by the receiver operator, the transmission of the symmetric key for encrypting the encrypted document to said authorised third party and a module able to perform, by said authorised third party, the decrypting of said encrypted document with said symmetric key.
